# FASCICULE DE BREVET EUROPEEN

(11) **EP 2 879 943 B1**
(45) Date de publication et mention de la délivrance du brevet: **05.10.2016**
(21) Numéro de dépôt: 13756645.1
(22) Date de dépôt: 01.08.2013
(51) Int. Cl.: B62K 19/34, B62K 13/00

(54) **BICYCLETTE CONVERTIBLE EN DRAISIENNE**
IN EIN STECKENPFERD UMWANDELBARES FAHRRAD
BICYCLE CONVERTIBLE INTO A HOBBY HORSE

(30) Priorité: 06.08.2012 FR 1257620
(43) Date de publication de la demande: 10.06.2015
(73) Titulaire: Decathlon, 59650 Villeneuve D'ascq (FR)
(72) Inventeur: PETITDEMANGE, David, F-59139 Wattignies (FR)
(74) Mandataire: Balesta, Pierre
(86) Numéro de dépôt international: PCT/FR2013/051861
(87) Numéro de publication internationale: WO 2014/023897

(56) Documents cités:
- CN-U- 202 029 959
- DE-A1- 3 418 930
- DE-U1- 20 009 914

## Description

### DOMAINE DE L'INVENTION

La présente invention a pour objet une bicyclette et plus particulièrement une bicyclette pouvant être convertie en draisienne.

### ETAT DE LA TECHNIQUE ANTERIEURE

On connaît des bicyclettes convertibles en draisiennes. Cependant lorsque la bicyclette est convertie en draisienne, il reste toujours au moins un élément de transmission, en général le pignon arrière, sur la bicyclette. DE 20009914 U1 reflète l'état de la technique.

L'utilisation de ce type de bicyclette convertible déjà connu reste compliquée, notamment en raison de la complexité du montage et du démontage des éléments de transmission. En effet, ces éléments de transmission sont montés sur la bicyclette à partir de pièces détachées que l'utilisateur doit assembler ou démonter à l'aide d'outils.

Par ailleurs, lorsque la bicyclette est convertie en draisienne, on risque de perdre une ou plusieurs pièces détachées. De plus l'utilisateur, en général un enfant, risque de se salir et/ou de se blesser sur le pignon arrière.

### PRESENTATION DE L'INVENTION

Un but de la présente invention est de remédier au moins substantiellement aux inconvénients précités.

L'invention atteint ce but en proposant une bicyclette comprenant un cadre, une roue arrière montée en rotation autour d'un arbre transversal solidaire dudit cadre et un module de transmission comprenant un pédalier, un organe de liaison et une roue d'entraînement arrière reliée au pédalier par l'organe de liaison et formant un ensemble unitaire démontable de sorte que la bicyclette peut être convertie en draisienne, le module de transmission étant fixé de manière amovible au cadre et à un moyeu de la roue arrière grâce à un système de fixation.

On comprend que le module de transmission forme un ensemble unitaire « monobloc » pouvant se monter et se démonter d'un seul bloc, de manière aisée et rapide selon que l'on souhaite utiliser la bicyclette en mode bicyclette (module de transmission monté) ou en mode draisienne (module de transmission démonté).

De préférence, l'organe de liaison est une chaîne. Il pourrait également s'agir d'une courroie de transmission, lisse ou crantée.

De préférence, la roue d'entraînement arrière est un pignon ou une poulie, qui peut être lisse ou crantée.

On comprend que le pédalier et la roue d'entraînement arrière sont montés sur un support commun, l'organe de liaison restant en position autour de la roue d'entraînement arrière et du plateau du pédalier. On comprend également que le système de fixation permet de fixer le module de transmission au cadre et au moyeu de la roue arrière de sorte que la roue d'entraînement arrière coopère avec le moyeu de la roue arrière et que le pédalier coopère avec le cadre.

Grâce à la structure monobloc du module de transmission, ce dernier peut être monté/démonté facilement, sans risque de perte de pièce. Par ailleurs, tous les éléments de transmission étant retirés en mode draisienne, le risque que l'utilisateur se blesse ou se salisse avec un élément de transmission est minimisé.

Avantageusement, la roue d'entraînement arrière et/ou le pédalier sont montés à jeu avec le support. Cela permet de faciliter le montage et le démontage du module de transmission. On entend par « montés à jeu » que la roue d'entraînement et/ou le pédalier sont montés sur le support en ayant un jeu radial et/ou axial, les orientations radiale et axiale étant considérées par rapport à l'axe de rotation respectif de la roue d'entraînement et du pédalier. Ainsi, la roue d'entraînement et/ou le pédalier peuvent bouger autour d'une position moyenne. En particulier, lorsque le jeu est radial, la roue d'entraînement et/ou le pédalier sont mobiles radialement autour d'une position moyenne de leur axe respectif. Préférentiellement, la roue d'entraînement est montée à jeu tandis que le pédalier est solidaire du support.

Préférentiellement, le module de transmission comprend un limiteur de mouvement disposé au voisinage du périmètre de la roue d'entraînement arrière pour limiter les mouvements de la roue d'entraînement arrière lorsque le module de transmission est démonté.

On comprend que lorsque le module de transmission est démonté, la roue d'entraînement arrière peut bouger autour de son axe moyen, les mouvements ainsi engendrés pouvant provoquer un déraillement de l'organe de liaison. Le limiteur de mouvement limite les mouvements de la roue d'entraînement arrière de sorte que l'organe de liaison ne peut pas se dégager de l'organe de liaison et du plateau du pédalier. Ainsi, lorsque la roue d'entraînement est en butée contre le limiteur de mouvement, le jeu entre les dents de la roue d'entraînement arrière et l'organe de liaison, ainsi que le jeu entre le plateau et l'organe de liaison ne permettent pas à l'organe de liaison de dérailler. Avantageusement, le limiteur de mouvement est disposé entre la roue d'entraînement arrière et le plateau et forme une butée coopérant radialement avec la roue d'entraînement arrière.

Avantageusement, le pédalier comporte un arbre de pédalier, des manivelles munies de pédales et un plateau montés sur l'arbre de pédalier, l'arbre de pédalier étant installé dans une boîte de pédalier faisant partie du module de transmission et le système de fixation comporte une première fixation agencée pour solidariser la boîte de pédalier au cadre.

On comprend que le module de transmission est fixé sur le cadre de la bicyclette notamment par l'intermédiaire de la boîte de pédalier. La première fixation coopère donc d'une part avec la boîte de pédalier et d'autre part avec le cadre de la bicyclette. Cette configuration permet un montage aisé du bloc de transmission sur la bicyclette.

Avantageusement, le module de transmission comporte un carter qui abrite la roue d'entraînement arrière, l'organe de liaison et le plateau, ladite boîte de pédalier étant solidaire du carter.

Dans cette variante, on comprend que le carter forme le support précité. Grâce au carter, les éléments du module de transmission sont logés à l'intérieur du carter, et sont abrités de l'extérieur. Ainsi le carter rend le montage et le démontage du module de transmission plus aisé grâce au fait qu'on manipule un seul bloc facilement manipulable, et ce sans se salir (notamment absence de graisse à l'extérieur du carter). Le carter présente en outre une fonction de protection de l'utilisateur lorsque le module de transmission est monté.

Avantageusement, le cadre comporte une platine dans laquelle est défini un arceau de positionnement conformé pour recevoir la boîte de pédalier, la première fixation comprend une première tige filetée fixée à une première molette, le cadre et la platine étant percés pour permettre le passage de ladite première tige filetée pour coopérer avec un taraudage du boîtier de pédalier.

On comprend que l'arceau de positionnement coopère par complémentarité de forme avec la boîte de pédalier. L'arceau assure le positionnement adéquat de la boîte de pédalier par rapport au cadre de sorte que la première tige filetée est aisément placée en vis-à-vis du taraudage de la boîte de pédalier, ceci facilitant le montage du module de transmission. Par ailleurs, l'arceau présente une fonction de maintien de la boîte de pédalier et permet un assemblage robuste du module de transmission au cadre de la bicyclette. Cet arceau permet notamment de bloquer, ou de fortement limiter, les mouvements de la boîte de pédalier induits lorsque l'utilisateur pédale.

La première fixation peut comprendre une seule partie ou plusieurs parties. Dans cet exemple, la première fixation est en deux parties, une première partie de la première fixation comprenant la première tige filetée munie de sa première molette tandis qu'une deuxième partie de la première fixation comprend le taraudage ménagé dans la boîte de pédalier.

Avantageusement, lorsque le module de transmission est démonté, la première fixation reste en tout ou partie solidaire du cadre.

On comprend que dans l'exemple ci-dessus la première partie de la première fixation, et notamment la première tige filetée muni de sa molette, reste en position sur le cadre. On évite alors de la perdre lorsque le module de transmission est démonté.

Avantageusement, le système de fixation comprend une deuxième fixation comprenant une deuxième tige filetée fixée à une deuxième molette, la deuxième tige filetée étant configurée pour être vissée dans un taraudage ménagé axialement dans ledit arbre transversal supportant la roue arrière.

Comme la première fixation, la deuxième fixation peut comprendre une seule ou plusieurs parties. Dans cet exemple, la deuxième fixation est en deux parties, la première partie de la deuxième fixation comprenant la deuxième tige filetée munie de sa molette et la deuxième partie de la deuxième fixation comprenant le taraudage ménagé axialement dans l'arbre transversal supportant la roue arrière. Cette deuxième fixation assure d'une part la fixation du module de transmission, et d'autre part une bonne stabilisation de la roue d'entraînement arrière par rapport au moyeu.

On comprend que la combinaison de la première fixation et de la deuxième fixation permet un assemblage simple du module de transmission au cadre d'une part et au moyeu de la roue arrière d'autre part, ce qui permet un montage/démontage aisé et rapide.

Avantageusement, lorsque le module de transmission est démonté, une partie de la deuxième fixation reste solidaire du module de transmission.

Par exemple, la deuxième tige filetée munie de sa molette reste solidaire du module de transmission. On évite alors de la perdre lorsque le module de transmission est démonté.

Avantageusement, l'extrémité dudit arbre transversal située du côté du module de transmission, porte un bouchon comportant dans sa partie centrale ledit taraudage dans lequel se visse ladite deuxième tige filetée.

On comprend que le bouchon est emmanché en tout ou partie dans une cavité ménagée dans ladite extrémité de l'arbre transversal. Cette configuration présente une structure d'assemblage compacte, avantageuse du point de vue de l'encombrement général de la bicyclette, et plus particulièrement de la deuxième fixation. Lorsque le module de transmission est monté sur la bicyclette, la deuxième tige filetée est vissée dans le taraudage du bouchon.

Avantageusement, le moyeu de la roue arrière comprend un premier manchon de couplage en rotation qui fait saillie axialement du côté du module de transmission et le module de transmission comprend un deuxième manchon de couplage en rotation solidaire de la roue d'entraînement arrière, le premier manchon et le deuxième manchon s'emboitant l'un dans l'autre.

On comprend que le premier manchon est solidaire du moyeu de la roue arrière et coopère par emboîtement avec le deuxième manchon, solidaire en rotation de la roue d'entraînement arrière. Lorsque le module de transmission est démonté, le premier manchon reste solidaire du moyeu de la roue arrière tandis que le deuxième manchon reste solidaire du module de transmission par l'intermédiaire de la roue d'entraînement arrière.

Avantageusement, une entretoise disposée dans une partie du deuxième manchon comporte un épaulement prenant appui sur l'extrémité dudit arbre transversal située du côté du module de transmission. Préférentiellement, l'entretoise prend appui sur le bouchon.

Avantageusement, l'entretoise est munie dans sa partie centrale d'un alésage dans lequel s'engage la deuxième tige filetée.

On comprend que lorsque la deuxième tige filetée est vissée dans le taraudage du bouchon, l'épaulement de l'entretoise coopère en butée avec l'extrémité de l'arbre transversal.

L'entretoise améliore l'assemblage de la roue d'entraînement arrière avec le moyeu de la roue arrière et plus particulièrement l'assemblage du premier manchon avec le deuxième manchon et permet d'éviter, pendant l'utilisation en mode bicyclette, que la roue d'entraînement arrière se désaxe par rapport au moyeu. L'entretoise réduit les jeux entre le premier et le deuxième manchon, et améliore donc leur couplage. Ainsi, on améliore la transmission d'effort entre la roue d'entraînement arrière et le moyeu de la roue arrière tout en limitant les phénomènes d'usure, par exemple dus à un positionnement imprécis entre le premier et le deuxième manchon.

Avantageusement, un manchon parmi le premier et le deuxième manchon présente des rainures régulièrement espacées circonférentiellement, l'autre manchon parmi le premier et le deuxième manchon présente des nervures régulièrement espacées circonférentiellement, le nombre de rainures étant un multiple du nombre de nervures.

On comprend que le nombre de rainures est plus grand que le nombre de nervures. Préférentiellement, le nombre de rainures est compris entre 2 et 20 fois le nombre de nervures. Ceci permet d'assurer un emboîtement aisé du premier et du deuxième manchon quelles que soient leurs positions angulaires relatives.

Selon une variante, le premier manchon comporte les nervures et le deuxième manchon comporte les rainures. Une telle configuration permet d'obtenir un diamètre du premier manchon réduit, ce qui améliore le guidage lors du montage du module de transmission.

Avantageusement, le cadre comporte une unique branche de support de la roue arrière située du côté opposé à l'emplacement dudit module de transmission et ledit arbre transversal de la roue arrière étant solidaire de ladite unique branche.

Une telle branche unique permet un montage aisé du module de transmission sur le moyeu de la roue arrière. De plus, l'unique branche de support étant disposée du côté opposé à l'emplacement du module de transmission, la distance entre la roue d'entraînement arrière et la roue arrière est réduite (car aucun élément, tel qu'un bras, n'est disposé entre la roue arrière et la roue d'entraînement arrière). On réduit ainsi l'encombrement général selon la direction axiale (du moyeu de la bicyclette et de l'arbre de pédalier), ce qui, en mode bicyclette, libère de l'espace pour les pieds de l'utilisateur. Ainsi, l'utilisateur n'a pas les jambes trop écartées.

Avantageusement, l'unique branche de support présente une section transversale évolutive.

Un tel profil évolutif permet d'adapter la forme de la branche pour que son encombrement soit optimisé tout en conservant une inertie de section sensiblement constante le long de la branche. Avantageusement, la section transversale de la branche est sensiblement circulaire du côté du pédalier tandis qu'elle est sensiblement oblongue du côté du moyeu de la roue arrière.

Avantageusement, le module de transmission comprend un tendeur de chaîne.

Le tendeur de chaîne permet de conserver une tension de chaîne optimale et de compenser les jeux éventuels de la roue d'entraînement arrière et/ou les phénomènes d'usure classiques de la chaîne. Il permet en outre, lorsque le module de transmission est démonté, de maintenir la chaîne engagée avec la roue d'entraînement arrière et le plateau de pédalier, afin d'éviter tout déraillement. Selon une variante, le tendeur de chaîne est fixé sur le carter.

Avantageusement, le module de transmission comprend une armature (ou armature de renfort). Avantageusement, l'armature présente des moyens de fixation, par exemple un ou plusieurs trous taraudés, pour fixer un stabilisateur.

Une telle armature, de préférence métallique, permet de reprendre les efforts de tension générés par la chaîne et évite alors un désaxage de la roue d'entraînement arrière par rapport au moyeu. L'armature, permet en outre le montage d'un stabilisateur de type « petites roues » et assure un point de fixation rigide pour le stabilisateur.

### BREVE DESCRIPTION DES DESSINS

L'invention et ses avantages seront mieux compris à la lecture de la description détaillée faite ci-après d'un mode de réalisation de l'invention donné à titre d'exemple non limitatif. Cette description fait référence aux figures annexées, sur lesquelles :
- la figure 1 est une vue en perspective d'une bicyclette équipée du module de transmission selon l'invention,
- la figure 2 est une vue de la bicyclette de la figure 1 en mode draisienne, le module de transmission étant désolidarisé du cadre et du moyeu de la roue arrière,
- la figure 3 est une vue de dessus de la bicyclette de la figure 1 selon la flèche III,
- la figure 4 est une vue en perspective éclatée du module de transmission de la bicyclette de la figure 1,
- la figure 5 est une vue en coupe, selon le plan A-A de la figure 3, de la première fixation,
- la figure 6 est une vue en coupe selon le plan B-B de la figure 5, de la première fixation,
- la figure 7 est une vue en coupe suivant le plan C-C de la figure 1, de la deuxième fixation, et
- les figures 8A et 8B sont des vues en perspective, respectivement, du premier et du deuxième manchon de couplage en rotation.

### DESCRIPTION DETAILLEE D'EXEMPLES DE REALISATION

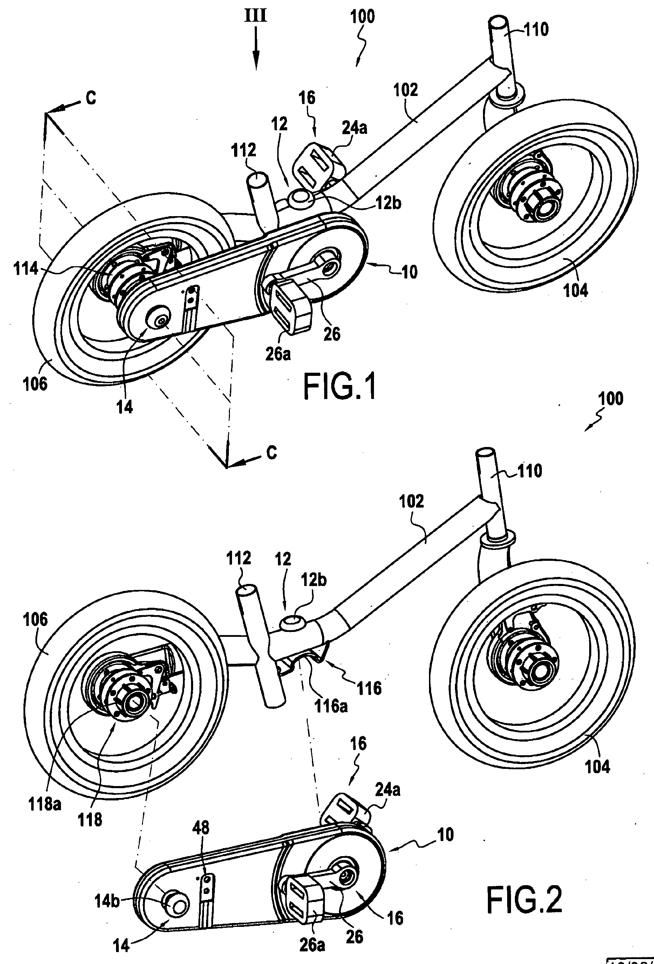

Un exemple d'une bicyclette convertible en draisienne selon l'invention est décrit en référence aux figures 1 à 8B.

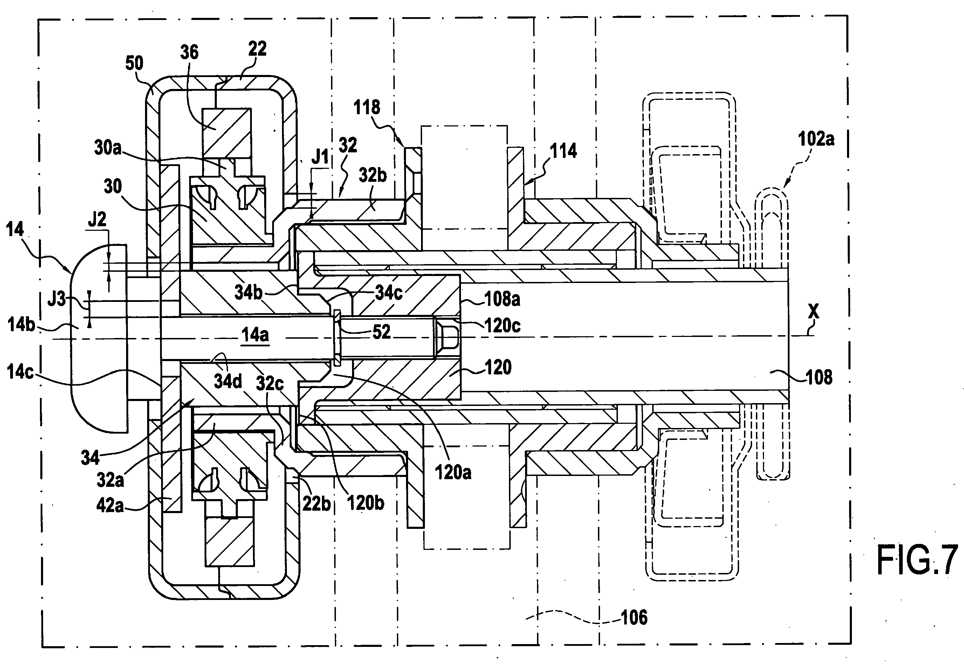

Les figures 1 à 3 représentent une vue partielle d'une bicyclette 100 convertible en draisienne munie d'un module de transmission 10 démontable. La bicyclette 100 comporte un cadre 102, une roue avant 104, une roue arrière 106 en rotation autour d'un arbre transversal 108 (voir figure 7). Le cadre comprend notamment un tube de guidon 110 et une tige de selle 112, le guidon et la selle n'étant pas représentés.

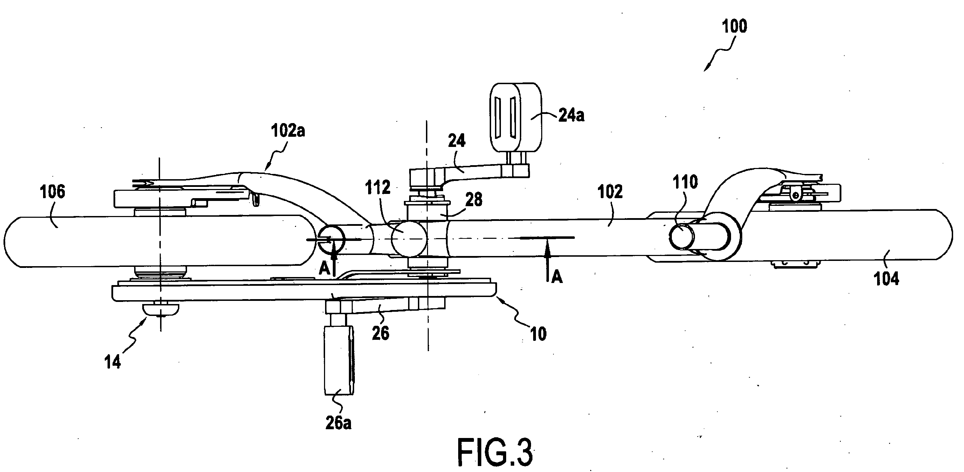

Notamment, comme illustré sur la figure 3, le cadre 102 comprend une unique branche 102a de support de la roue arrière 106 disposée du côté opposé au module de transmission 10. Cette unique branche 102a présente une section transversale évolutive. Ainsi, la section transversale de la branche 102a évolue progressivement d'une section transversale circulaire à une section transversale oblongue (orientée sensiblement verticalement i.e., perpendiculairement à la direction axiale du moyeu de la roue arrière) lorsqu'on se rapproche du moyeu 114 de la roue arrière 106. L'arbre transversal 108 autour duquel la roue arrière 106 est montée en rotation est solidaire de la branche 102a.

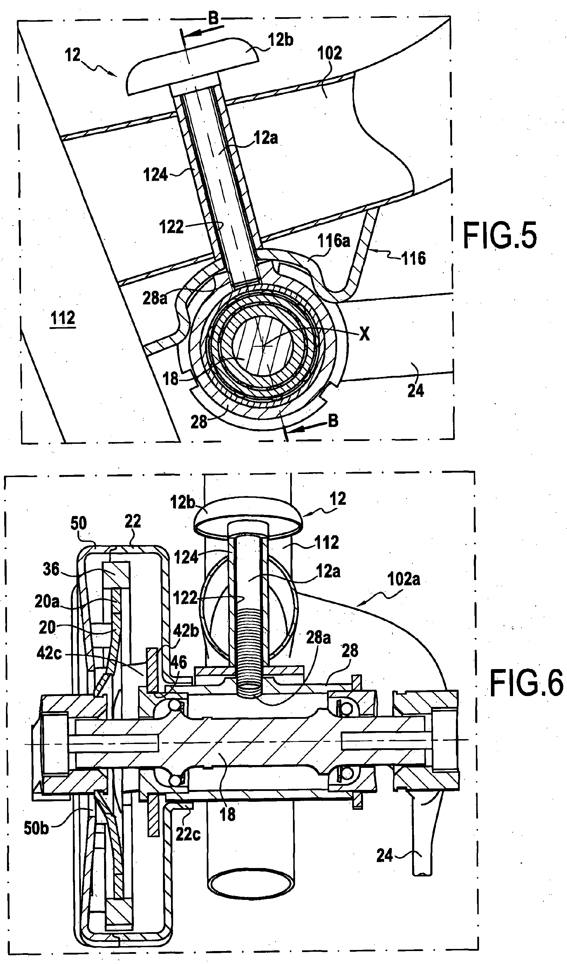

Le module de transmission 10 est fixé au cadre 102 et au moyeu 114 de la roue arrière 106. Plus précisément, le module de transmission 10 est fixé au cadre 102 à l'aide d'une première fixation 12, par l'intermédiaire d'une platine 116 formant un arceau de positionnement 116a fixée au cadre 102 (voir figures 5 et 6). Dans cet exemple, la platine 116 est positionnée sous le cadre 102 de la bicyclette 100, c'est-à-dire en regard du sol en utilisation normale de la bicyclette. La platine 116 est fixée au cadre 102 de la bicyclette 100 par exemple par soudage, boulonnage ou tout autre moyen connu par ailleurs.

Par ailleurs, le module de transmission 10 est fixé au moyeu 114 de la roue arrière 106 à l'aide d'une deuxième fixation 14 par l'intermédiaire d'un premier manchon 118 de couplage en rotation, solidaire du moyeu 114 de la roue arrière 106 (voir figure 7), et qui fait saillie axialement du côté du module de transmission 10.

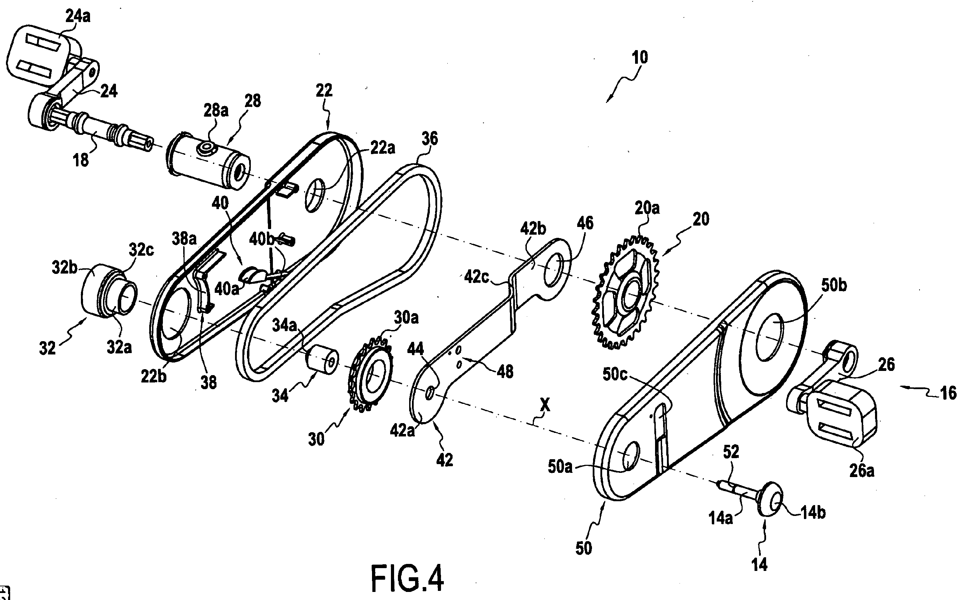

Le module de transmission 10 est décrit plus en détails en référence aux figures 4 à 8B. Le module de transmission 10 comprend notamment un pédalier 16, une roue d'entraînement arrière 30 constituée ici d'un pignon arrière 30, un organe de liaison 36 reliant le plateau à la roue d'entraînement arrière, ledit organe de liaison étant ici constitué d'une chaîne 36, et un carter 22 logeant une partie du pédalier, le pignon arrière 30 et la chaîne 36. Le carter 22 comprend un capot 50 pour former un volume sensiblement clos. Bien entendu, le carter 22 présente des trous 22a et 22b permettant respectivement le passage de la boîte de pédalier 28 et du deuxième manchon 32 décrits ci-après tandis que le capot présente des trous 50a, 50b et 50c permettant respectivement le passage de la deuxième tige filetée 14a, de l'arbre de pédalier 18 et d'un stabilisateur (non représenté) décrits ci-après.

Le pédalier 16 comprend un arbre de pédalier 18 sur lequel est fixé un plateau 20. Chacune des extrémités de l'arbre de pédalier 18 est couplée à une manivelle 24 et 26, chaque manivelle étant munie d'une pédale 24a et 26a. L'arbre de pédalier 18 est logé en partie dans une boîte de pédalier 28. Cette boîte de pédalier 28 est équipée d'un taraudage 28a faisant partie de la première fixation 12 pour fixer le module de transmission 10 au cadre 102. La boîte de pédalier 28 est fixée au carter 22 par des moyens connus par ailleurs, par l'intermédiaire d'une bride 22c s'étendant au voisinage du premier trou 22a (voir figure 6).

Le pignon arrière 30, présentant un axe de rotation X, est fixé sur une première partie 32a d'un deuxième manchon 32 de couplage en rotation. Ce deuxième manchon 32 coopère par emboîtement avec un premier manchon 118 du moyeu 114 de la roue arrière 106, décrit ci-après.

La première partie 32a est de forme cylindrique et s'étend dans le carter 22. Le deuxième manchon 32 comprend également une deuxième partie de forme cylindrique 32b faisant saillie du carter 22 selon la direction axiale vers la roue 106. Ainsi, le deuxième manchon 32 s'étend à travers le deuxième trou 22b du carter 22. Un jeu radial J1 de maximum trois millimètres (3 mm) est ménagé entre le deuxième manchon 32 et le contour du deuxième trou 22b (voir figure 7). Ce jeu radial J1 permet notamment, lors du montage du module de transmission 10 sur le moyeu 114, de faciliter le centrage du deuxième manchon 32 sur le moyeu 114. Dans cet exemple, le diamètre interne de la première partie 32a est inférieur au diamètre interne de la deuxième partie 32b. Une portion intermédiaire 32c s'étendant radialement joint les première et deuxième parties 32a et 32b du deuxième manchon 32.

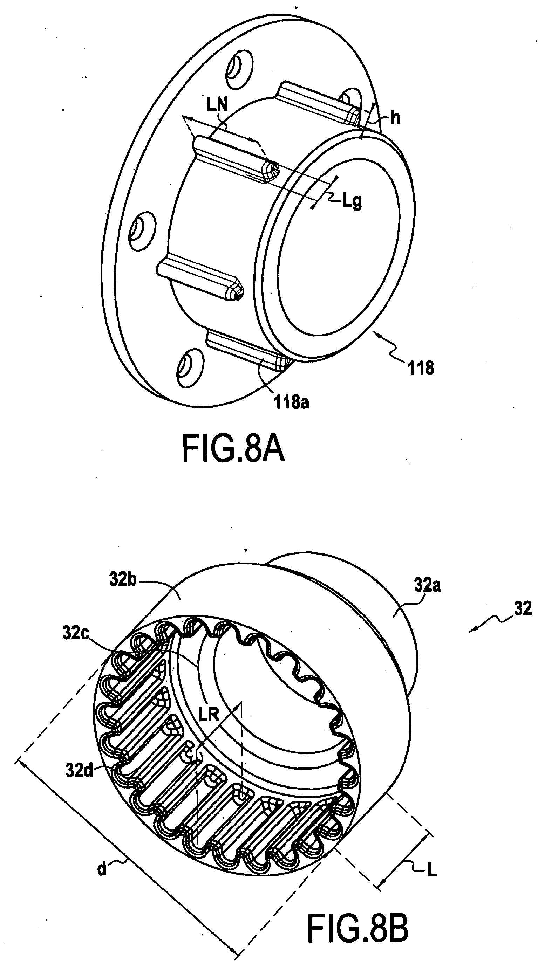

Lorsqu'ils coopèrent par emboîtement, le premier manchon 32 et le deuxième manchon 118 sont couplés en rotation. En effet, le premier manchon 118 comprend des nervures longitudinales 118a présentant dans cet exemple une hauteur h de 2 mm, une largeur Lg de 3 mm et une longueur LN de 17 mm. Ces nervures sont régulièrement espacées angulairement sur toute la circonférence du premier manchon 118 (voir figure 8A). Dans cet exemple, le ratio LN/Lg est égal à 5.67. De manière générale, le ratio LN/Lg est compris de préférence entre 5 et 6. Un ratio LN/Lg compris entre 5 et 6 est avantageux lors du montage car il permet un bon guidage entre les deux manchons 32 et 118.Le deuxième manchon 32 comprend des rainures longitudinales (i.e. s'étendant parallèlement à la direction axiale X) 32d conformées de manière à recevoir lesdites nervures 118a, lesdites nervures 118a étant régulièrement espacées angulairement sur toute la circonférence du deuxième manchon 32 (voir figure 8B). Le nombre de rainures est supérieur au nombre de nervures. Dans cet exemple, il a 24 rainures et 6 nervures. En d'autres termes il a y quatre fois plus de rainures que de nervures. Dans cet exemple, le diamètre externe d de la deuxième partie 32b du deuxième manchon 32 mesure 51 mm. En outre, la longueur LN de chaque nervure s'étend sur au moins 90% de la longueur L de la deuxième partie 32b du deuxième manchon 32. Dans cet exemple, la longueur LR des rainures est sensiblement égale à la longueur LN des nervures. De manière générale, la longueur LR des rainures est supérieure ou égale à la longueur LN des nervures. Cette configuration permet un meilleur couplage entre le premier manchon 32 et le deuxième manchon 118.

Une entretoise 34 de forme sensiblement cylindrique est en partie insérée dans le deuxième manchon 32 (voir figure 7). Le diamètre externe de l'entretoise 34 est sensiblement inférieur au diamètre interne de la première partie 32a du deuxième manchon 32. Un jeu radial J2 de maximum un millimètre (1 mm) est ménagé entre l'entretoise 34 et la première partie 32a du deuxième manchon 32. Comme le jeu J1, ce jeu radial J2 permet notamment, lors du montage du module de transmission 10 sur le moyeu 114, de faciliter le centrage du deuxième manchon 32 sur le moyeu. De plus, en utilisation, l'entretoise 34 et le jeu J2 permettent d'éviter un désaxage (mise de biais) du pignon arrière par rapport au moyeu.

L'extrémité de l'entretoise 34 en regard du moyeu 114 est munie d'un épaulement 34b et d'une portion cylindrique 34c faisant saillie selon l'axe X en s'étendant hors du carter 22 en direction du moyeu 114. Cette portion cylindrique coopère par emmanchement avec l'évidement 120a du bouchon 120 de l'extrémité 108a de l'arbre transversal 108 disposée en regard du module de transmission 10 (voir figure 7). L'évidement 120a loge la portion cylindrique 34c lorsque le module de transmission 10 est fixé au moyeu 116. En outre, l'épaulement 120b du bouchon 120 coopère en appui avec l'épaulement 34b de l'entretoise 34. L'entretoise 34 présente dans sa partie centrale un alésage axial 34d tandis que le bouchon 120 présente un taraudage axial 120c. L'alésage 34d et le taraudage 120c coopèrent avec la tige 14a de la deuxième fixation 14.

La chaîne 36 coopère avec les dents 20a du plateau 20 et les dents 30a du pignon arrière 30 et couple ces derniers en rotation de manière classique. Le carter 22 comprend un système tendeur de chaîne 40 qui coopère avec la chaîne 36 afin que cette dernière présente une tension sensiblement constante en utilisation et qu'elle ne se désengage pas des dents 20a et 30a lorsque le module de transmission 10 est démonté. Dans cet exemple, le système tendeur de chaîne 40 comprend un bras 40b munie à son extrémité distale d'un galet 40a s'étendant à l'intérieur du carter 22. La flexibilité du bras 40b et/ou un ressort non représenté génère(nt) les efforts de rappel du tendeur. Selon une variante non représentée, le système tendeur de chaîne 40 comprend un ressort à lame coopérant avec la chaîne par l'intermédiaire d'une pièce de friction.

Un limiteur de mouvement 38 est fixé sur le carter 22 au voisinage du périmètre du pignon arrière 30. Dans cet exemple, le limiteur de mouvement 38 est formé par une nervure 38a en forme d'arc de cercle disposée entre le pignon arrière 30 et le plateau 20 de telle sorte qu'il y a un jeu compris entre 0,5 mm et 2 mm entre la périphérie du pignon arrière 30 et la nervure 38a. Ce limiteur de mouvement permet également d'éviter que la chaîne 36 ne se désengage des dents 20a et 30a.

Le module de transmission 10 comprend une armature 42 s'étendant dans le carter 22 entre le pignon arrière 30 et le plateau 20. Une première partie 42a de l'armature 42 s'étend du côté du pignon arrière et est positionnée avec un jeu radial J3 autour de l'axe de rotation X du pignon arrière. Dans cet exemple, J3=3 mm. L'armature 42 comprend en outre une deuxième partie 42b décalée axialement par rapport à la première partie 42a de sorte que la deuxième partie 42b est disposée entre le carter 22 et le plateau 20. Les première et deuxième parties 42a et 42b sont reliées par une portion oblique 42c. La première partie 42a de l'armature 42 présente un premier trou d'armature 44 disposé en vis-à-vis de l'alésage 34d de l'entretoise 34. Le diamètre du trou 44 est supérieur au diamètre de la deuxième tige filetée 14a mais inférieur à l'épaulement 14c de la deuxième molette 14b (voir figure 7). La deuxième partie 42b de l'armature 42 présente un deuxième trou d'armature 46 grâce à quoi la deuxième partie 42b est engagée autour et est solidaire, par exemple par soudage ou par montage serré par emmanchement, de la boîte de pédalier 28. L'armature 42 comprend des trous taraudés 48 pour le montage d'un stabilisateur non représenté.

Le montage du module de transmission 10 va être expliqué en référence aux figures 5 à 8b. Pour monter le module de transmission 10, on le fixe d'une part au moyeu 114 et d'autre part au cadre via la platine 116, de préférence dans cet ordre. Bien entendu pour démonter le module de transmission 10, on effectue les mêmes opérations que pour le montage mais dans l'ordre inverse.

Pour fixer le module de transmission 10 au moyeu 114 on fait coopérer le deuxième manchon 32 avec le premier manchon 118 par emboîtement, de sorte que la portion intermédiaire 32c du deuxième manchon 32 est en appui contre le premier manchon 118 comme cela est illustré sur la figure 7.

Comme illustré sur la figure 7, une fois que les premier et deuxième manchons 118 et 32 sont emmanchés, le module de transmission 10 est fixé au moyeu 114 à l'aide de la deuxième fixation 14. La deuxième fixation 14 comprend la deuxième tige filetée 14a équipée de la deuxième molette 14b et le taraudage 120c formée dans le bouchon 120 de l'arbre transversal 108. Pour ce faire, la deuxième tige filetée 14a, est insérée dans l'alésage 34d de l'entretoise 34, et vissée dans le taraudage 120c jusqu'à ce que l'épaulement 14c de la deuxième molette 14b soit en butée contre la première partie 42a de l'armature 42 et que l'épaulement 34b de l'entretoise 34 soit en butée contre l'épaulement 120b du bouchon 120.

Pour fixer le module de transmission 10 au cadre 102, on positionne la boîte de pédalier 28 dans l'arceau 116a, puis on fixe la boîte de pédalier 28 au cadre 102 à l'aide de la première fixation 12.

Lorsque la boîte de pédalier 28 est installée dans l'arceau de positionnement 116a, le taraudage 28a de la boîte de pédalier 28 est en vis-à-vis d'un trou axial 122 du cadre 102 et de l'arceau de positionnement 116a. De plus, un fourreau 124 disposé dans le trou 122 et fixé à l'arceau de positionnement 116a guide la première tige filetée 12a. Cette dernière est ensuite vissée dans le taraudage 28a de la boîte de pédalier 28, grâce à la première molette 12b.

Pour le démontage du module de transmission 10, il suffit de dévisser les première et deuxième tiges filetées 12a et 14a, de dégager la boîte de pédalier 28 de l'arceau 116a et de découpler le premier et le deuxième manchon 118 et 32.

Lorsque que le module de transmission est démonté, la première tige filetée 12a reste solidaire du cadre 102 tandis que la deuxième tige filetée 14a reste solidaire du module de transmission 10 grâce à un circlips 52 (ou segment d'arrêt), représenté sur la figure 7.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Bicyclette (100) comprenant un cadre (102), une roue arrière (106) montée en rotation autour d'un arbre transversal (108) solidaire dudit cadre (102), ladite bicyclette étant **caractérisée en ce qu'**elle comprend en outre un module de transmission (10) comprenant un pédalier (16), un organe de liaison (36) et une roue d'entraînement arrière (30) reliée au pédalier par l'organe de liaison et formant un ensemble unitaire démontable de sorte que la bicyclette peut être convertie en draisienne, le module de transmission (10) étant fixé de manière amovible au cadre (102) et à un moyeu (114) de la roue arrière (106) grâce à un système de fixation (12, 14).

2. Bicyclette selon la revendication 1, **caractérisée en ce que** le module de transmission (10) comprend un limiteur de mouvement (38) disposé au voisinage du périmètre de la roue d'entraînement arrière (30) pour limiter les mouvements de ladite roue d'entraînement arrière (30) lorsque le module de transmission (10) est démonté.

3. Bicyclette selon la revendication 1 ou 2, **caractérisée en ce que** le pédalier (16) comporte un arbre de pédalier (18), des manivelles (24, 26) munies de pédales (24a, 26a) et un plateau (20) montés sur l'arbre de pédalier (18), **en ce que** l'arbre de pédalier (18) est installé dans une boîte de pédalier (28) faisant partie du module de transmission (10) et **en ce que** le système de fixation comprend une première fixation (12) agencée pour solidariser la boîte de pédalier (28) au cadre (102).

4. Bicyclette selon la revendication 3, **caractérisée en ce que** le module de transmission (10) comporte un carter (22) qui abrite la roue d'entraînement arrière (30), l'organe de liaison (36) et le plateau (20), ladite boîte de pédalier (28) étant solidaire du carter (22).

5. Bicyclette selon la revendication 3 ou 4, **caractérisée en ce que** le cadre (102) comporte une platine (116) dans laquelle est définie un arceau de positionnement (116a) conformé pour recevoir la boîte de pédalier (28), **en ce que** la première fixation (12) comprend une première tige filetée (12a) fixée à une première molette (12b) et **en ce que** le cadre (102) et la platine (116) sont percés pour permettre le passage de ladite première tige filetée (12a) pour coopérer avec un taraudage (28a) du boîtier de pédalier (28).

6. Bicyclette selon l'une quelconque des revendications 3 à 5, **caractérisée en ce que** lorsque le module de transmission (10) est démonté, la première fixation (12) reste en tout ou partie solidaire du cadre (102).

7. Bicyclette selon l'une quelconque des revendications 1 à 6, **caractérisée en ce que** le système de fixation comprend une deuxième fixation (14) comprenant une deuxième tige filetée (14a) fixée à une deuxième molette (14b), la deuxième tige filetée (14a) étant configurée pour être vissée dans un taraudage (120c) ménagé axialement dans ledit arbre transversal (108) supportant la roue arrière (106).

8. Bicyclette selon la revendication 7, **caractérisée en ce que** lorsque le module de transmission (10) est démonté, une partie de la deuxième fixation (14) reste solidaire du module de transmission (10).

9. Bicyclette selon la revendication 7 ou 8, **caractérisée en ce que** l'extrémité (108a) dudit arbre transversal (108) située du côté du module de transmission (10), porte un bouchon (120) comportant dans sa partie centrale ledit taraudage (120c) dans lequel se visse ladite deuxième tige filetée (14a).

10. Bicyclette selon l'une quelconque des revendications 1 à 9, **caractérisée en ce que** le moyeu (114) de la roue arrière (106) comprend un premier manchon (118) de couplage en rotation qui fait saillie axialement du côté du module de transmission (10) et **en ce que** le module de transmission (10) comprend un deuxième manchon (32) de couplage en rotation solidaire de la roue d'entraînement arrière (30), le premier manchon (118) et le deuxième manchon (32) s'emboitant l'un dans l'autre.

11. Bicyclette selon la revendication 10, **caractérisée en ce qu'**une entretoise (34) disposée dans une partie du deuxième manchon (32) comporte un épaulement (34b) prenant appui sur l'extrémité dudit arbre transversal (108) située du côté du module de transmission (10).

12. Bicyclette selon la revendication 11, **caractérisée en ce que** l'entretoise (34) est munie dans sa partie centrale d'un alésage (34d) dans lequel s'engage la deuxième tige filetée (14a).

13. Bicyclette selon l'une quelconque des revendications 10 à 12, **caractérisée en ce qu'**un manchon parmi le premier et le deuxième manchon (118, 32) présente des rainures (32d) régulièrement espacées circonférentiellement, **en ce que** l'autre manchon parmi le premier et le deuxième manchon (118, 32) présente des nervures (118a) régulièrement espacées circonférentiellement, et **en ce que** le nombre de rainures (32d) est un multiple du nombre de nervures (118a).

14. Bicyclette selon la revendication 13, **caractérisée en ce que** le premier manchon (118) comporte les nervures (118a) et **en ce que** le deuxième manchon (32) comporte les rainures (32d).

15. Bicyclette selon l'une quelconque des revendications 1 à 14, **caractérisée en ce que** le cadre (102) comporte une unique branche (102a) de support de la roue arrière (106) située du côté opposé à l'emplacement dudit module de transmission (10) et **en ce que** ledit arbre transversal (108) de la roue arrière (106) est solidaire de ladite unique branche (102a).

16. Bicyclette selon la revendication 15, **caractérisée en ce que** l'unique branche (102a) présente une section transversale évolutive.

17. Bicyclette selon l'une quelconque des revendications 1 à 16, **caractérisée en ce que** le module de transmission (10) comprend un tendeur de chaîne (40).

18. Bicyclette selon l'une quelconque des revendications 1 à 17, **caractérisée en ce que** le module de transmission (10) comprend une armature (42).

## Patentansprüche

1. Fahrrad (100), umfassend einen Rahmen (102), ein Hinterrad (106), das um eine mit dem Rahmen (102) fest verbundene Querwelle (108) drehbar angebracht ist, wobei das Fahrrad **dadurch gekennzeichnet ist, dass** es ferner ein Übersetzungsmodul (10) umfasst, das eine Tretkurbel (16), ein Verbindungsorgan (36) und ein hinteres Antriebsrad (30), welches über das Verbindungsorgan mit der Tretkurbel verbunden ist, umfasst und das eine demontierbare einheitliche Anordnung bildet, so dass das Fahrrad in ein Laufrad umgewandelt werden kann, wobei das Übersetzungsmodul (10) an dem Rahmen (102) und an einer Nabe (114) des Hinterrades (106) mit Hilfe eines Befestigungssystems (12, 14) lösbar befestigt ist.

2. Fahrrad nach Anspruch 1, **dadurch gekennzeichnet, dass** das Übersetzungsmodul (10) einen Bewegungsbegrenzer (38), der in der Nähe des Umfangs des hinteren Antriebsrades (30) angeordnet ist, umfasst, um die Bewegungen des hinteren Antriebsrades (30) zu begrenzen, wenn das Übersetzungsmodul (10) demontiert ist.

3. Fahrrad nach Anspruch 1 oder 2, **dadurch gekennzeichnet, dass** die Tretkurbel (16) eine Tretlagerwelle (18), mit Pedalen (24a, 26a) versehene Kurbeln (24, 26) und ein Rad (20), die an der Tretlagerwelle (18) angebracht sind, umfasst, dass die Tretlagerwelle (18) in einem zu dem Übersetzungsmodul (10) gehörenden Tretlagergehäuse (28) angebracht ist und dass das Befestigungssystem eine erste Befestigung (12) umfasst, die dazu eingerichtet ist, das Tretlagergehäuse (28) fest mit dem Rahmen (102) zu verbinden.

4. Fahrrad nach Anspruch 3, **dadurch gekennzeichnet, dass** das Übersetzungsmodul (10) ein Gehäuse (22) umfasst, in dem das hintere Antriebsrad (30), das Verbindungsorgan (36) und das Rad (20) untergebracht sind, wobei das Tretlagergehäuse (28) mit dem Gehäuse (22) fest verbunden ist.

5. Fahrrad nach Anspruch 3 oder 4, **dadurch gekennzeichnet, dass** der Rahmen (102) eine Platte (116) umfasst, in der ein Positionierungsbogen (116a) definiert ist, welcher dazu ausgebildet ist, das Tretlagergehäuse (28) aufzunehmen, dass die erste Befestigung (12) eine erste Gewindestange (12a) umfasst, die an einem ersten Rädchen (12b) befestigt ist, und dass der Rahmen (102) und die Platte (116) durchbohrt sind, um den Durchgang der ersten Gewindestange (12a) für ein Zusammenwirken mit einem Innengewinde (28a) des Tretlagergehäuses (28) zu ermöglichen.

6. Fahrrad nach einem der Ansprüche 3 bis 5, **dadurch gekennzeichnet, dass**, wenn das Übersetzungsmodul (10) demontiert ist, die erste Befestigung (12) ganz oder teilweise fest mit dem Rahmen (102) verbunden bleibt.

7. Fahrrad nach einem der Ansprüche 1 bis 6, **dadurch gekennzeichnet, dass** das Befestigungssystem eine zweite Befestigung (14) umfasst, welche eine an einem zweiten Rädchen (14b) befestigte zweite Gewindestange (14a) umfasst, wobei die zweite Gewindestange (14a) dazu ausgelegt ist, in ein Innengewinde (120c), welches in der das Hinterrad (106) tragenden Querwelle (108) axial ausgebildet ist, geschraubt zu werden.

8. Fahrrad nach Anspruch 7, **dadurch gekennzeichnet, dass**, wenn das Übersetzungsmodul (10) demontiert ist, ein Teil der zweiten Befestigung (14) mit dem Übersetzungsmodul (10) fest verbunden bleibt.

9. Fahrrad nach Anspruch 7 oder 8, **dadurch gekennzeichnet, dass** das Ende (108a) der Querwelle (108), welches auf der Seite des Übersetzungsmoduls (10) gelegen ist, einen Stopfen (120) trägt, der in seinem mittleren Teil das Innengewinde (120c), in das die zweite Gewindestange (14a) eingeschraubt wird, umfasst.

10. Fahrrad nach einem der Ansprüche 1 bis 9, **dadurch gekennzeichnet, dass** die Nabe (114) des Hinterrades (106) eine erste Drehkupplungshülse (118) umfasst, die auf der Seite des Übersetzungsmoduls (10) axial vorspringt, und dass das Übersetzungsmodul (10) eine zweite Drehkupplungshülse (32), welche mit dem hinteren Antriebsrad (30) fest verbunden ist, umfasst, wobei die erste Hülse (118) und die zweite Hülse (32) ineinander gesteckt werden.

11. Fahrrad nach Anspruch 10, **dadurch gekennzeichnet, dass** ein Abstandsstück (34), das in einem Teil der zweiten Hülse (32) angeordnet ist, eine Schulter (34b) umfasst, die sich an dem auf der Seite des Übersetzungsmoduls (10) gelegenen Ende der Querwelle (108) abstützt.

12. Fahrrad nach Anspruch 11, **dadurch gekennzeichnet, dass** das Abstandsstück (34) in seinem mittleren Teil mit einer Bohrung (34d) versehen ist, in die die zweite Gewindestange (14a) eingreift.

13. Fahrrad nach einem der Ansprüche 10 bis 12, **dadurch gekennzeichnet, dass** eine Hülse der ersten und zweiten Hülse (118, 32) Nuten (32d), die umfangsmäßig gleichmäßig beanstandet sind, umfasst und dass die andere Hülse der ersten und zweiten Hülse (118, 32) Rippen (118a), die umfangsmäßig gleichmäßig beanstandet sind, umfasst und dass die Anzahl der Nuten (32d) ein Vielfaches der Anzahl der Rippen (118a) ist.

14. Fahrrad nach Anspruch 13, **dadurch gekennzeichnet, dass** die erste Hülse (118) die Rippen (118a) umfasst und dass die zweite Hülse (32) die Nuten (32d) umfasst.

15. Fahrrad nach einem der Ansprüche 1 bis 14, **dadurch gekennzeichnet, dass** der Rahmen (102) einen einzigen Schenkel (102a) zum Tragen des Hinterrades (106) umfasst, der auf der der Stelle des Übersetzungsmoduls (10) gegenüberliegenden Seite gelegen ist, und dass die Querwelle (108) des Hinterrades (106) mit dem einzigen Schenkel (102a) fest verbunden ist.

16. Fahrrad nach Anspruch 15, **dadurch gekennzeichnet, dass** der einzige Schenkel (102a) einen sich progressiv ändernden Querschnitt aufweist.

17. Fahrrad nach einem der Ansprüche 1 bis 16, **dadurch gekennzeichnet, dass** das Übersetzungsmodul (10) einen Kettenspanner (40) umfasst.

18. Fahrrad nach einem der Ansprüche 1 bis 17, **dadurch gekennzeichnet, dass** das Übersetzungsmodul (10) einen Rahmen (42) umfasst.

## Claims

1. A bicycle (100) comprising a frame (102), and a rear wheel (106) mounted to rotate about a transverse shaft (108) secured to said frame (102), said bicycle being **characterized in that** it further comprises a transmission module (10) comprising a crankset (16), a connection member (36), and a rear drive wheel (30) connected to the crankset by the connection member, the transmission module forming a removable unitary assembly such that the bicycle can be converted into a hobby-horse, the transmission module (10) being removably fastened to the frame (102) and to a hub (114) of the rear wheel (106) by a fastener system (12, 14).

2. A bicycle according to claim 1, **characterized in that** the transmission module (10) includes a movement limiter (38) arranged in the vicinity of the perimeter of the rear drive wheel (30) in order to limit movements of said rear drive wheel (30) when the transmission module (10) is removed.

3. A bicycle according to claim 1 or claim 2, **characterized in that** the crankset (16) includes a pedal shaft (18), cranks (24, 26) provided with pedals (24a, 26a), and a chainwheel (20) mounted on the pedal shaft (18), **in that** the pedal shaft (18) is installed in a crankset bushing (28) forming part of the transmission module (10), and **in that** the fastener system comprises a first fastener (12) arranged to secure the crankset bushing (28) to the frame (102).

4. A bicycle according to claim 3, **characterized in that** the transmission module (10) includes a casing (22) that houses the rear drive wheel (30), the connection member (36), and the chainwheel (20), said crankset bushing (28) being secured to the casing (22).

5. A bicycle according to claim 3 or claim 4, **characterized in that** the frame (102) includes a plate (116) in which a positioning arch (116a) is defined that is shaped to receive the crankset bushing (28), **in that** the first fastener (12) comprises a first threaded rod (12a) fastened to a first knob (12b), and **in that** the frame (102) and the plate (116) are pierced to pass said first threaded rod (12a) in order to co-operate with a tapped hole (28a) in the crankset bushing (28).

6. A bicycle according to any one of claims 3 to 5, **characterized in that** when the transmission module (10) is removed, the first fastener (12) remains secured to the frame (102), in full or in part.

7. A bicycle according to any one of claims 1 to 6, **characterized in that** the fastener system includes a second fastener (14) comprising a second threaded rod (14a) fastened to a second knob (14b), the second threaded rod (14a) being configured to be screwed into a tapped hole (120c) formed axially in said transverse shaft (108) supporting the rear wheel (106).

8. A bicycle according to claim 7, **characterized in that** when the transmission module (10) is removed, a portion of the second fastener (14) remains secured to the transmission module (10).

9. A bicycle according to claim 7 or claim 8, **characterized in that** the end (108a) of said transverse shaft (108) situated beside the transmission module (10) carries a plug (120) including in its central portion said tapped hole (120c) into which said second threaded rod (14a) is screwed.

10. A bicycle according to any one of claims 1 to 9, **characterized in that** the hub (114) of the rear wheel (106) includes a first rotary coupling sleeve (118) that projects axially beside the transmission module (10), and **in that** the transmission module (10) includes a second rotary coupling sleeve (32) secured to the rear drive wheel (30), the first sleeve (118) and the second sleeve (32) interfitting one in the other.

11. A bicycle according to claim 10, **characterized in that** a spacer (34) arranged in a portion of the second sleeve (32) includes a shoulder (34b) bearing against the end of said transverse shaft (108) that is situated beside the transmission module (10).

12. A bicycle according to claim 11, **characterized in that** the spacer (34) is provided in its central portion with a bore (34d) in which the second threaded rod (14a) engages.

13. A bicycle according to any one of claims 10 to 12, **characterized in that** one of the first and second sleeves (118, 32) presents grooves (32d) that are regularly spaced apart circumferentially, **in that** the other one of the first and second sleeves (118, 32) presents splines (118a) that are regularly spaced apart circumferentially, and **in that** the number of grooves (32d) is a multiple of the number of splines (118a).

14. A bicycle according to claim 13, **characterized in that** the first sleeve (118) has the splines (118a) and **in that** the second sleeve (32) has the grooves (32d).

15. A bicycle according to any one of claims 1 to 14, **characterized in that** the frame (102) has a single support branch (102a) for supporting the rear wheel (106) and situated on the side opposite from the location for said transmission module (10), and **in that** said transverse shaft (108) of the rear wheel (106) is secured to said single branch (102a).

16. A bicycle according to claim 15, **characterized in that** the single branch (102a) presents a cross-section that varies.

17. A bicycle according to any one of claims 1 to 16, **characterized in that** the transmission module (10) includes a chain tensioner (40).

18. A bicycle according to any one of claims 1 to 17, **characterized in that** the transmission module (10) includes a strength member (42).
